# EUROPÄISCHE PATENTANMELDUNG

(11) **EP 2 966 593 A1**
(43) Veröffentlichungstag der Anmeldung: **13.01.2016**
(21) Anmeldenummer: 14176351.6
(22) Anmeldetag: 09.07.2014
(51) Int. Cl.: G06K 9/20, G06K 7/00

(54) **Bilderfassungssystem zum Detektieren eines Objektes**

(71) Anmelder: SICK AG, 79183 Waldkirch (DE)
(72) Erfinder: Wehrle, Klemens, 79297 Winden (DE); Lu, Long, Nakano-ku, Tokyo 164-0012 (JP)
(74) Vertreter: Ludewigt, Christoph

(57) **Zusammenfassung**

Um bei einer Erfassung einer Kontur eines Objektes ein hochauflösendes Bild zu erhalten, ist ein Bilderfassungssystem zum Detektieren eines Objektes vorgesehen, das einen definierten Erfassungsbereich, in dem das durch den Erfassungsbereich bewegte Objekt detektierbar ist, zumindest zwei Beleuchtungseinheiten zum Beleuchten des Erfassungsbereichs mit je einem Lichtstrahl, und zumindest zwei Lichtempfangseinheiten zum Empfangen von an dem Objekt reflektiertem Licht umfasst, wobei je eine Beleuchtungseinheit einer Lichtempfangseinheit zugeordnet ist, und wobei die Beleuchtungseinheiten jeweils ihren Lichtstrahl mit einer definierten Lichtwellenlänge aussenden und die Lichtempfangseinheiten ausgelegt sind, jeweilige ihnen zugeordnete definierte Lichtwellenlänge des reflektierten Lichts zu empfangen, wobei die eine Lichtempfangseinheit eine andere Lichtwellenlänge als die andere Lichtempfangseinheit empfängt.

## Beschreibung

Die Erfindung betrifft ein Bilderfassungssystem zum Detektieren eines Objektes, das einen definierten Erfassungsbereich, in dem das durch den Erfassungsbereich bewegte Objekt detektierbar ist, zumindest zwei Beleuchtungseinheiten zum Beleuchten des Erfassungsbereichs mit je einem Lichtstrahl, und zumindest zwei Lichtempfangseinheiten zum Empfangen von an dem Objekt reflektiertem Licht umfasst.

In der heutigen Industrie nimmt der Automatisierungsgrad einer technischen Anlage stetig zu, so dass Objekte, wie z. B. Pakete oder Montageteile, im automatisierten Betrieb von A nach B befördert werden. Hierbei ist es wichtig, dass die auf einem Förderband bewegten Objekte richtig und in einem benötigten Detailgrad detektiert werden. Insbesondere wenn z. B. ein Identifizierungsbarcode auf dem Objekt ausgelesen werden soll, so muss eine klare Erfassung der Kontur des Objektes einerseits und des Identifizierungsbarcodes andererseits gewährleistet sein.

Hierzu wird das Förderband in bekannter Weise durch Beleuchtungseinheiten aus verschiedenen Richtungen beleuchtet und ein auf dem Förderband bewegtes Objekt durch Lichtempfangseinheiten, die an dem Objekt reflektiertes Licht erfassen, detektiert.

Es stellt sich das Problem, dass bei der Anordnung der Beleuchtungseinheiten, die Lichtstrahlen der Beleuchtungseinheiten sich überkreuzen können bzw. müssen, um eine platzsparende Anlage zu ermöglichen. Hierdurch kommt es jedoch zu einer Überbelichtung, so dass die Bildqualität der Lichtempfangseinheiten negativ beeinflusst wird.

EP 1 850 269 B1 offenbart eine oben beschriebene Scanvorrichtung, bei der eine Überkreuzung der Lichtstrahlen der Beleuchtungseinheiten auftritt und eine Überbelichtung stattfinden kann. Hierbei schlägt EP 1 850 269 B1 vor, durch Änderung des Betriebszustandes der Scanvorrichtung, insbesondere der Beleuchtungs- und/oder Lichtempfangseinheiten, das Problem der Überbelichtung zu lösen.

Konkret sollten gemäß EP 1 850 269 B1 die Empfindlichkeit wenigstens einer der Lichtempfangseinheiten im Überlappungsbereich reduziert und/oder die Intensität einer der Beleuchtungseinheiten im Überlappungsbereich herabgesetzt bzw. komplett ausgeschaltet werden.

Ferner ist eine beschriebene Scanvorrichtung ebenfalls aus der EP 2 126 781 B1 bekannt, bei der das Problem der Überbelichtung beim Scannen durch eine Überkreuzung der Lichtstrahlen erkannt wurde.

Hierzu wird als Lösung des Problems eine synchronisierte Beleuchtung des Objektes auf dem Förderband mit Lichtpulsen vorgeschlagen, so dass das Objekt im möglichen Überlappungsbereichs der Beleuchtungs- und Lichtempfangseinheiten immer nur durch eine Beleuchtungseinheit belichtet und von einer Lichtempfangseinheit erfasst wird.

Es ist daher eine Aufgabe der Erfindung, ein Bilderfassungssystem zum Detektieren eines Objektes derart zu verbessern, dass eine Vermeidung einer Überbelichtung bei der Detektion und somit eine erhöhte Bildqualität des Bilderfassungssystems erzielbar ist.

Die Aufgabe wird erfindungsgemäß gelöst durch ein Bilderfassungssystem zum Detektieren eines Objektes, das Bilderfassungssystem umfasst einen definierten Erfassungsbereich, in dem das durch den Erfassungsbereich bewegte Objekt detektierbar ist, zumindest zwei Beleuchtungseinheiten zum Beleuchten des Erfassungsbereichs mit je einem Lichtstrahl, und zumindest zwei Lichtempfangseinheiten zum Empfangen von an dem Objekt reflektiertem Licht, wobei je eine Beleuchtungseinheit einer Lichtempfangseinheit zugeordnet ist, und wobei die Beleuchtungseinheiten jeweils ihren Lichtstrahl mit einer definierten Lichtwellenlänge aussenden und die Lichtempfangseinheiten ausgelegt sind, jeweilige ihnen zugeordnete definierte Lichtwellenlänge des reflektierten Lichts zu empfangen, wobei die eine Lichtempfangseinheit eine andere Lichtwellenlänge als die andere Lichtempfangseinheit empfängt.

Dies hat den Vorteil, dass das Bilderfassungssystem durch mehrfaches Überkreuzen der Lichtstrahlen der Beleuchtungseinheiten sehr kompakt aufgebaut werden kann, wobei die unterschiedlichen, verwendeten Lichtwellenlängen, insbesondere Lichtstrahlen in unterschiedlichen Farben, der Beleuchtungseinheiten zu keiner Überbelichtung führen.

Ferner ergibt sich als weiterer Vorteil gegenüber dem Stand der Technik ein einfacher Betrieb des Bilderfassungssystems und somit eine stabile Erfassung des Objektes, da während des Betriebes die Funktionalität der Beleuchtungs- und Lichtempfangseinheiten, wie z. B. Beleuchtungsintensität bzw. -dauer oder Erfassungszeitpunkt des Objektes, nicht laufend geändert bzw. geregelt oder synchronisiert werden muss. Solch eine Regelung bzw. Synchronisation ist in Abhängigkeit der Förderbandgeschwindigkeit zu steuern, so dass die Steuerung des erfindungsgemäßen Bilderfassungssystems ohne diese Abhängigkeit ausgelegt werden kann und das erfindungsgemäße Bilderfassungssystem entsprechend an unterschiedlichen, insbesondere bereits vorhandenen, Förderbänden einfach integrierbar ist.

Weiterhin weist das erfindungsgemäße Bilderfassungssystem eine erhöhte Lebensdauer als Vorteil auf, da ein kontinuierlicher Betrieb der Beleuchtungs- und Lichtempfangseinheiten gewährleistet ist und die Beleuchtungs- und Lichtempfangseinheiten keinen laufenden Spitzenbelastungen, wie z. B. Ein- und Ausschalten, ausgesetzt sind.

Gemäß einem bevorzugten Ausführungsbeispiel umfasst die Lichtempfangseinheit eine Zeilenkamera mit einem optischen Filter für die zugeordnete definierte Lichtwellenlänge. Dadurch ist jede Lichtempfangseinheit in der Lage nur die für sie zugeordnete definierte Lichtwellenlänge zu erfassen und das reflektierte Licht mit den anderen Lichtwellenlängen auszublenden.

Gemäß einem weiteren bevorzugten Ausführungsbeispiel weisen die Beleuchtungs- und Lichtempfangseinheit einen Lesebereich auf, der durch den Lichtstrahl mit der definierten Lichtwellenlänge definiert ist.

Weiterhin sind gemäß einem weiteren bevorzugten Ausführungsbeispiel die Beleuchtungs- und Lichtempfangseinheiten derart angeordnet, dass sich die Lesebereiche der Beleuchtungs- und Lichtempfangseinheiten teilweise, vorzugsweise in 45° zueinander, überkreuzen, so dass das Objekt an der Überkreuzung von zumindest zwei Lichtstrahlen mit unterschiedlichen Lichtwellenlängen beleuchtet ist.

Gemäß einem weiteren bevorzugten Ausführungsbeispiel ist eine Mehrzahl an Beleuchtungs- und Lichtempfangseinheiten vorgesehen, die zueinander gerichtet angeordnet sind, und das Objekt ist von einer entsprechenden Anzahl an Lichtstrahlen mit entsprechenden Lichtwellenlängen beleuchtet, so dass sämtliche Seiten des Objektes detektierbar sind.

Gemäß einem weiteren bevorzugten Ausführungsbeispiel umfassen die Lichtstrahlen Lichtwellenlängen der Farben rot, blau, gelb und/oder grün.

Gemäß einem weiteren bevorzugten Ausführungsbeispiel senden die Beleuchtungseinheiten, deren Lichtstrahlen sich kreuzen, Lichtstrahlen unterschiedlicher Lichtwellenlängen aus.

Gemäß einem weiteren bevorzugten Ausführungsbeispiel senden die Beleuchtungseinheiten, deren Lichtstrahlen sich nicht kreuzen, Lichtstrahlen gleicher Lichtwellenlängen aus.

Die erfindungsgemäße Vorrichtung bzw. das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines erfindungsgemäßen Bilderfassungssystems;
- Fig. 2: die schematische Detaildarstellung eines Ausführungsbeispiels des erfindungsgemäßen Bilderfassungssystems;
- Fig.3: die schematische Detaildarstellung eines weiteren Ausführungsbeispiels des erfindungsgemäßen Bilderfassungssystems mit fünf Beleuchtungs- und Lichtempfangseinheiten; und
- Fig. 4: die schematische Detaildarstellung eines weiteren Ausführungsbeispiels des erfindungsgemäßen Bilderfassungssystems mit acht Beleuchtungs- und Lichtempfangseinheiten.

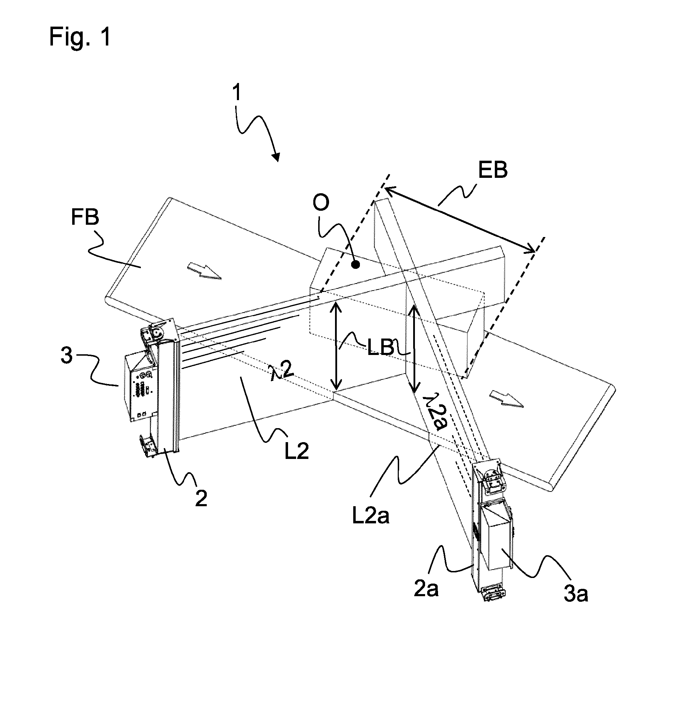

Figur 1 zeigt eine schematische Darstellung eines erfindungsgemäßen Bilderfassungssystem 1, das im Ausführungsbeispiel zwei Beleuchtungseinheiten 2, 2a und zwei Lichtempfangseinheiten 3, 3a aufweist. Je eine Beleuchtungseinheit 2, 2a ist einer Lichtempfangseinheit 3, 3a zugeordnet, so dass die zwei Beleuchtungseinheiten 2, 2a bzw. Lichtempfangseinheiten 3, 3a in einem Winkel von ungefähr 45° zueinander auf einer Seite eines Förderbands FB aufgestellt sind.

Die Beleuchtungs- und Lichtempfangseinheiten 2, 2a, 3, 3a definieren einen Erfassungsbereich EB auf dem Förderband FB, so dass ein auf dem Förderband FB befördertes Objekt O in dem Erfassungsbereich EB von den Beleuchtungseinheiten 2, 2a beleuchtet wird. Das an dem Objekt O reflektierte Licht wird von den Lichtempfangseinheiten 3, 3a erfasst, so dass die Kontur des Objektes O detektierbar ist.

Hierzu sendet jede Beleuchtungseinheit 2, 2a einen Lichtstrahl L2, L2a mit einer definierten Lichtwellenlänge λ2, λ2a, insbesondere Licht in unterschiedlichen Farben, in Richtung des Förderbands FB aus. Die Lichtstrahlen L2, L2a definieren für die jeweiligen Beleuchtungs- und Lichtempfangseinheiten 2, 2a, 3, 3a einen Lesebereich LB und bilden jeweils eine Beleuchtungslinie, wie durch die insbesondere senkrecht zu dem Förderband FB gezeichneten Linien in der Figur dargestellt.

Da sich die Lesebereiche LB der zwei Beleuchtungs- und Lichtempfangseinheiten 2, 2a, 3, 3a bzw. die Beleuchtungslinie der beiden Beleuchtungseinheiten 2, 2a an dem Objekt O kreuzen, senden die Beleuchtungseinheiten 2, 2a Lichtstrahlen L2, L2a mit unterschiedlichen Lichtwellenlängen λ2, λ2a, insbesondere Licht in unterschiedlichen Farben, aus. Die der jeweiligen Beleuchtungseinheit 2, 2a zugeordnete Lichtempfangseinheit 3, 3a ist derart ausgelegt, dass sie nur das reflektierte Licht mit der entsprechenden definierten Lichtwellenlänge λ2, λ2a, d. h. insbesondere der zugewiesenen Farbe, empfangen kann.

D. h. insbesondere, die Lichtempfangseinheit 3, 3a umfasst eine Zeilenkamera zum Erfassen der Beleuchtungslinie mit einem optischen Filter für die zugeordnete definierte Lichtwellenlänge λ2, λ2a, so dass bei dem konkret beschriebenen Ausführungsbeispiel eine Beleuchtungseinheit 2 einen Lichtstrahl L2 mit der Lichtwellenlänge λ2 der Farbe rot und die andere Beleuchtungseinheit 2a einen Lichtstrahl L2a mit der Lichtwellenlänge λ2a der Farbe blau aussenden. Die eine Zeilenkamera empfängt durch den optischen Filter nur reflektiertes Licht mit der Lichtwellenlänge λ2 der Farbe rot und die andere Zeilenkamera empfängt ebenfalls durch den zugeordneten optischen Filter nur reflektiertes Licht mit der Lichtwellenlänge λ2a der Farbe blau.

Dadurch wird, obwohl die beiden Lichtstrahlen L2, L2a der Belichtungs- und Lichtempfangseinheiten 2, 2a, 3, 3a an dem Kreuzungspunkt am Objekt O aufeinander treffen, eine Überbelichtung des Objektes O vermieden, so dass keine gegenseitige Beeinflussung der Lichtempfangseinheiten 3, 3a bzw. der Zeilenkameras durch die der jeweils anderen Lichtempfangseinheit 3a, 3 zugeordneten Beleuchtungseinheit 2a, 2 stattfindet und eine störungsfreie Bilderfassung durchgeführt werden kann.

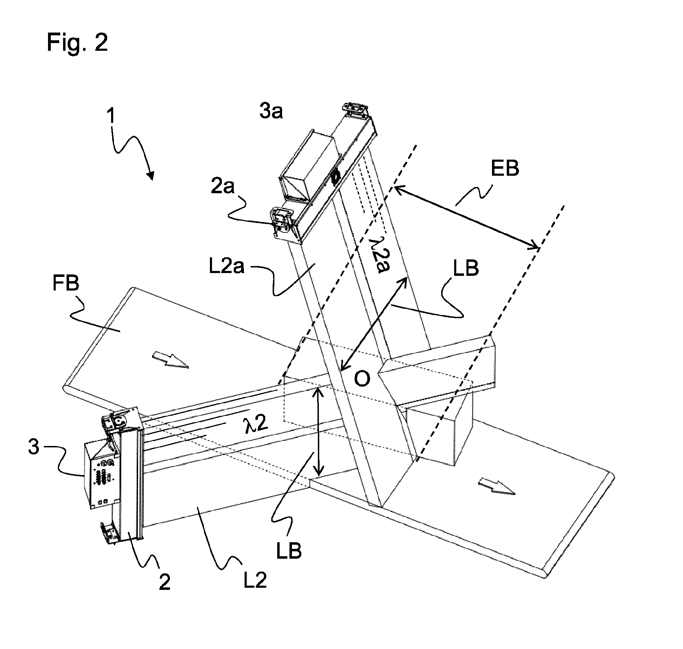

In der Figur 2 ist ein bevorzugtes Ausführungsbeispiel gezeigt, wobei die gleichen Bezugszeichen für die gleichen Elemente wie in der Figur 1 stehen.

Bei dem Ausführungsbeispiel wird das Förderband FB durch eine Beleuchtungs- und Lichtempfangseinheit 2, 3 von der Seite und durch eine weitere Beleuchtungs- und Lichtempfangseinheit 2a, 3a von oben erfasst.

Das auf dem Förderband FB beförderte Objekt O wird somit im Gegensatz zu dem Ausführungsbeispiel in der Figur 1 von zwei Seiten durch die Beleuchtungs- und Lichtempfangseinheiten 2, 2a; 3, 3a detektiert. Hierbei kreuzen sich die Lesebereiche LB der beiden Beleuchtungs- bzw. Lichtempfangseinheiten 2, 2a; 3, 3a an zwei Seiten des Objektes O.

Da horizontal und vertikal zum Förderband FB zwei unterschiedliche Lichtwellenlängen λ2, λ2a, insbesondere unterschiedliche Farben, zum Beleuchten des Objektes O verwendet werden, und die horizontal bzw. vertikal zu dem Förderband FB angeordneten Lichtempfangseinheiten 3, 3a nur für die jeweilige Lichtwellenlänge λ2, λ2a ausgelegt sind, kann die Kontur des Objektes O ohne gegenseitige Beeinflussung der Lichtstrahlen L2, L2a genau erfasst werden.

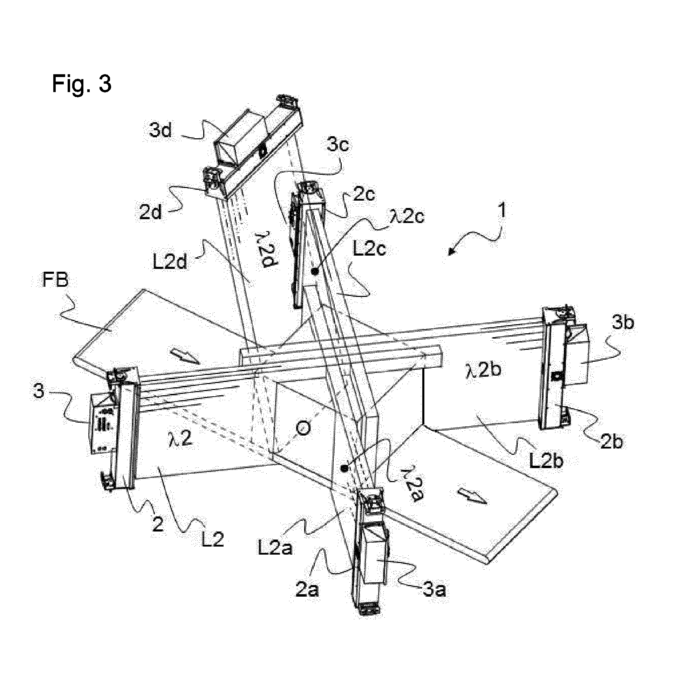

Für eine vollständige Detektion der Kontur des Objektes O auf dem Förderband FB ist eine Mehrzahl an Beleuchtungs- und Lichtempfangseinheiten 2, 2a - 2d; 3, 3a - 3d, wie bei dem Ausführungsbeispiel in der Figur 3 gezeigt, vorgesehen, so dass das Objekt O auf dem Förderband FB von einer entsprechenden Anzahl an Lichtstrahlen L2, L2a - L2d mit entsprechenden Lichtwellenlängen λ2, λ2a - λ2d beleuchtet ist.

Hierbei sind an beiden Seiten des Förderbands FB jeweils zwei Beleuchtungs- und Lichtempfangseinheiten 2, 2a; 2b, 2c; 3, 3a; 3b, 3c vorgesehen, wobei jeweils die zwei auf einer Seite des Förderbands FB angeordneten Beleuchtungs- und Lichtempfangseinheiten 2, 2a; 3, 3a; 2b, 2c; 3b, 3c in einem Winkel von ca. 45° zueinander ausgerichtet sind, so dass ihre Lichtstrahlen L2, L2a; L2b, L2c mit den jeweiligen Lichtwellenlängen λ2, λ2a; λ2b, λ2c, insbesondere Licht in unterschiedlichen Farben, über dem Objekt O teilweise überkreuzen.

Das Objekt O ist somit an seinen beiden Seiten jeweils zweimal von zwei Lichtstrahlen L2, L2a; L2b, L2c beleuchtet, die sich überkreuzen.

Oberhalb des Förderbands FB und damit vertikal beabstandet von den vier seitlich dem Förderband FB angeordneten Beleuchtungs- und Lichtempfangseinheiten 2, 2a-2c; 3, 3a - 3c sind weitere Beleuchtungs- und Lichtempfangseinheit 2d, 3d vorgesehen, die das Objekt O von oben beleuchten bzw. erfassen.

Hierbei weisen erfindungsgemäß die sich kreuzenden Lichtstrahlen L2, L2a; L2b, L2c unterschiedlichen Lichtwellenlängen λ2, λ2a; λ2b, λ2c, insbesondere Licht in unterschiedlichen Farben, zueinander auf. Die sich nicht kreuzenden Lichtstrahlen L2, L2b; L2a, L2c, d. h. insbesondere die diagonal zum Förderband FB gegenüberliegend angeordneten Beleuchtungs- und Lichtempfangseinheiten 2, 2b; 2a, 2c; 3, 3b; 3a, 3c, können die gleichen Lichtwellenlängen λ2, λ2b; λ2a, λ2c, insbesondere gleichfarbiges Licht, aufweisen, da sie sich nicht gegenseitig negativ beeinflussen.

Konkret bedeutet dies, dass die beiden ersten diagonal gegenüberliegend angeordneten Beleuchtungseinheiten 2, 2b Lichtstrahlen L2, L2b mit den Lichtwellenlängen λ2, λ2b der Farbe rot und die beiden anderen diagonal gegenüberliegend angeordneten Beleuchtungseinheiten 2a, 2c Lichtstrahlen L2a, L2c mit den Lichtwellenlängen λ2a, λ2c der Farbe blau aussenden. Die zu den Beleuchtungseinheiten 2, 2a - 2c zugehörigen Lichtempfangseinheiten 3, 3a - 3c sind zum Empfangen der jeweiligen Lichtwellenlängen λ2, λ2a - λ2c ausgelegt.

Der Lichtstrahl L2d der vertikal angeordneten Beleuchtungseinheit 2d kreuzt sich mit allen anderen Lichtstrahlen L2, L2a - L2c der seitlich vom Förderband FB angeordneten Beleuchtungseinheiten 2, 2a - 2c, so dass der Lichtstrahl L2d der vertikal angeordneten Beleuchtungseinheit 2d eine zu den anderen Lichtstrahlen L2, L2a - L2c verschiedene Lichtwellenlänge λ2d umfasst. Beispielhaft kann die Lichtwellenlänge λ2d der Farbe gelb sein, so dass trotz Überkreuzung der Lichtstrahlen L2, L2a - L2d die Lichtempfangseinheiten 3, 3a - 3d keine Störung bei der Detektion des Objektes O erfahren.

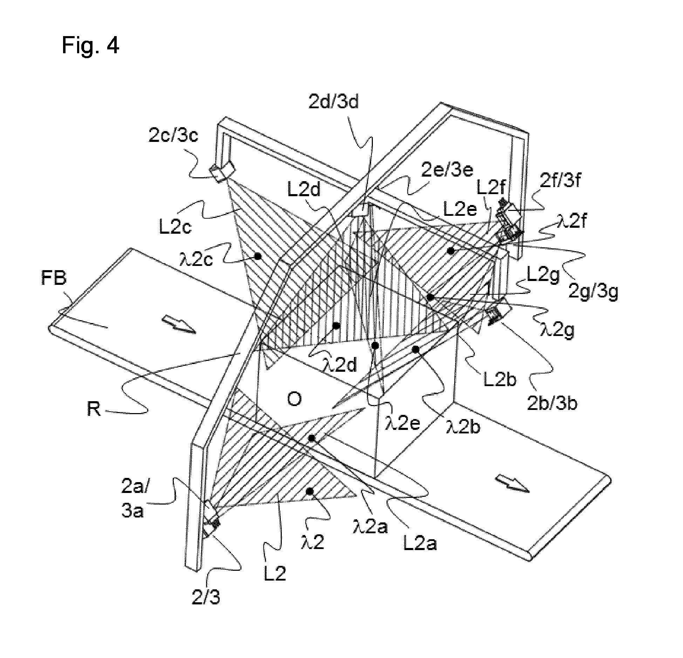

In der Figur 4 ist ein weiteres Ausführungsbeispiel des erfindungsgemäßen Bilderfassungssystems gezeigt, bei dem anstatt der vorherigen Ausführung acht Beleuchtungs- und zugehörige Lichtempfangseinheiten 2, 2a - 2g; 3, 3a - 3g vorgesehen sind.

Die Beleuchtungs- und Lichtempfangseinheiten 2, 2a - 2g; 3, 3a - 3g sind an einem Rahmen R um das Förderband FB montiert, so dass die beiden seitlichen, parallel zu der Förderbandrichtung gerichteten Wänden des Objektes O durch jeweils zwei Beleuchtungseinheiten 2, 2a; 2f, 2g beleuchtet und von zwei zugehörigen Lichtempfangseinheiten 3, 3a; 3f, 3g erfasst werden.

Die seitlichen Lichtstrahlen L2, L2a; L2f, L2g haben zueinander unterschiedliche Lichtwellenlängen λ2, λ2a; λ2f, λ2g.

Die Vorder- und Hinterseite des Objektes O werden von zwei weiteren Beleuchtungseinheiten 2b, 2c beleuchtet und ebenfalls von zwei zugehörigen Lichtempfangseinheiten 3b, 3c erfasst, wobei auch diese Beleuchtungseinheiten 2b, 2c Lichtstrahlen L2b, L2c mit zueinander unterschiedlichen Lichtwellenlängen λ2b, λ2c, insbesondere Licht in unterschiedlichen Farben, aussenden.

Zusätzlich zu den seitlichen Detektionen wird die obere Wand des Objektes O durch zwei am oberen Rahmen R vorgesehenen Beleuchtungseinheiten 2d, 2e mit Lichtstrahlen L2d, L2e unterschiedlicher Lichtwellenlängen λ2d, λ2e beleuchtet. Die Kontur der oberen Wand des Objektes O wird durch die zugehörigen Lichtempfangseinheiten 3d, 3e mittels Erfassen des reflektierten Lichts mit den Lichtwellenlängen λ2d, λ2e der oberen Beleuchtungseinheiten 2d, 2e detektiert.

Durch die Aussendung der Lichtstrahlen L2, L2a - L2g mit unterschiedlichen Lichtwellenlängen λ2, λ2a - λ2g können die Wänden des Objektes O ohne Überbelichtung und damit ohne Störung erfasst werden.

Gemäß einem nicht beschriebenen Ausführungsbeispiel können Beleuchtungseinheiten 2, 2a - 2g verwendet werden, die normales Licht mit den definierten Lichtwellenlängen λ2, λ2a - λ2g aussenden. Lediglich die Lichtempfangseinheiten 3, 3a - 3g werden mit unterschiedlichen optischen Filter für unterschiedliche Lichtwellenlängen λ2, λ2a - λ2g ausgestattet, so dass jede Lichtempfangseinheit 3, 3a - 3g entsprechend ihrem optischen Filter nur die Lichtwellenlänge λ2, λ2a - λ2g empfängt, für die die Lichtempfangseinheit 3, 3a - 3g vorgesehen ist. Dadurch lässt sich eine Überbelichtung bzw. negative Beeinflussung der Lichtempfangseinheit 3, 3a - 3g durch die anderen Lichtwellenlängen λ2, λ2a - λ2g vermeiden.

Eine genaue Bilderfassung des Objektes und eine einfache Auslegung des Bilderfassungssystems können somit erzielt werden.

### Bezugszeichenliste

- 1: Bilderfassungssystem
- 2, 2a - 2g: Beleuchtungseinheit
- 3, 3a - 3g: Lichtempfangseinheit
- EB: Erfassungsbereich
- FB: Förderband
- L2, L2a - L2g: Lichtstrahl
- LB: Lesebereich
- λ2, λ2a - λ2g: Lichtwellenlänge
- O: Objekt
- R: Rahmen

## Patentansprüche

1. Bilderfassungssystem (1) zum Detektieren eines Objektes (O), umfassend einen definierten Erfassungsbereich (EB), in dem das durch den Erfassungsbereich (EB) bewegte Objekt (O) detektierbar ist, zumindest zwei Beleuchtungseinheiten (2, 2a - 2g) zum Beleuchten des Erfassungsbereichs (EB) mit je einem Lichtstrahl (L2, L2a - L2g), wobei die Lichtstrahlen (L2, L2a - L2g) sich kreuzen, und zumindest zwei Lichtempfangseinheiten (3, 3a - 3g) zum Empfangen von an dem Objekt (O) reflektiertem Licht, wobei je eine Beleuchtungseinheit (2, 2a - 2g) einer Lichtempfangseinheit (3, 3a - 3g) zugeordnet ist, **dadurch gekennzeichnet, dass** die Beleuchtungseinheiten (2, 2a - 2g) jeweils ihren Lichtstrahl (L2, L2a - L2g) mit einer definierten Lichtwellenlänge (λ2, λ2a - λ2g) aussenden und die Lichtempfangseinheiten (3, 3a - 3g) ausgelegt sind, jeweilige ihnen zugeordnete definierte Lichtwellenlänge (λ2, λ2a - λ2g) des reflektierten Lichts zu empfangen, wobei die eine Lichtempfangseinheit (3, 3a - 3g) eine andere Lichtwellenlänge (λ2, λ2a - λ2g) als die andere Lichtempfangseinheit (3, 3a - 3g) empfängt.

2. Bildbearbeitungssystem (1) nach Anspruch 1, **dadurch gekennzeichnet, dass** die Lichtempfangseinheit (3, 3a - 3g) eine Zeilenkamera mit einem optischen Filter für die zugeordnete definierte Lichtwellenlänge (λ2, λ2a - λ2g) umfasst.

3. Bildbearbeitungssystem (1) nach Anspruch 1 oder 2, **dadurch gekennzeichnet, dass** die Beleuchtungseinheit (2, 2a - 2g) und die Lichtempfangseinheit (3, 3a - 3g) einen Lesebereich (LB) aufweisen, der durch den Lichtstrahl (L2, L2a-L2g) mit der definierten Lichtwellenlänge (λ2, λ2a - λ2g) definiert ist.

4. Bildbearbeitungssystem (1) nach Anspruch 4, **dadurch gekennzeichnet, dass** die Beleuchtungs- und Lichtempfangseinheiten (2, 2a - 2g; 3, 3a - 3g) derart angeordnet sind, dass sich die Lesebereiche (LB) der Beleuchtungs- und Lichtempfangseinheiten (2, 2a - 2g; 3, 3a - 3g) teilweise, vorzugsweise in 45° zueinander, überkreuzen, so dass das Objekt (O) an der Überkreuzung von zumindest zwei Lichtstrahlen (L2, L2a; L2a, L2b; L2, L2d; L2b, L2d; L2c, L2b; L2c, L2d; L2b, L2e; L2d, L2e; L2c, L2e; L2f, L2g) mit unterschiedlichen Lichtwellenlängen (λ2, λ2a; λ2a, λ2b; λ2, λ2d; λ2b, λ2d; λ2c, λ2b; λ2c, λ2d; λ2b, λ2e; λ2d, λ2e; λ2c, λ2e; λ2f, λ2g) beleuchtet ist.

5. Bildbearbeitungssystem (1) nach einem der vorhergehenden Ansprüche, **dadurch gekennzeichnet, dass** eine Mehrzahl an Beleuchtungs- und Lichtempfangseinheiten (2, 2a - 2g; 3, 3a - 3g) vorgesehen ist, die zueinander gerichtet angeordnet sind, und das Objekt (O) von einer entsprechenden Anzahl an Lichtstrahlen (L2, L2a - L2g) mit entsprechenden Lichtwellenlängen (λ2, λ2a -λ2g) beleuchtet ist, so dass sämtliche Seiten des Objektes (O) detektierbar sind.

6. Bildbearbeitungssystem (1) nach einem der vorhergehenden Ansprüche, **dadurch gekennzeichnet, dass** die Lichtstrahlen (L2, L2a - L2g) Lichtwellenlängen (λ2, λ2a - λ2g) der Farben rot, blau, gelb und/oder grün umfassen.

7. Bildbearbeitungssystem (1) nach einem der vorhergehenden Ansprüche, **dadurch gekennzeichnet, dass** die Beleuchtungseinheiten (2, 2a - 2g), deren Lichtstrahlen (L2, L2a - L2g) sich kreuzen, Lichtstrahlen unterschiedlicher Lichtwellenlängen (λ2, λ2a - λ2g) aussenden.

8. Bildbearbeitungssystem (1) nach einem der vorhergehenden Ansprüche, **dadurch gekennzeichnet, dass** die Beleuchtungseinheiten (2, 2a - 2g), deren Lichtstrahlen (L2, L2a - L2g) sich nicht kreuzen, Lichtstrahlen gleicher Lichtwellenlängen (λ2, λ2a - λ2g) aussenden.
